# EUROPÄISCHE PATENTANMELDUNG

(11) **EP 0 644 088 A2**
(43) Veröffentlichungstag der Anmeldung: **22.03.1995**
(21) Anmeldenummer: 94202517.2
(22) Anmeldetag: 02.09.1994
(51) Int. Cl.: B60R 21/22

(54) **Abdeckung der Austrittsöffnung für den Gassack einer hinter der Innenverkleidung eines Kraftfahrzeugs eingebauten Gassack-Aufprall-Schutzeinheit**

(30) Priorität: 10.09.1993 DE 4330692
(71) Anmelder: PARS Passive Rückhaltesysteme GmbH, 63755 Alzenau (DE)
(72) Erfinder: Herold, Jürgen, D-63743 Aschaffenburg (DE); Franz, Joachim, Dr., D-63857 Waldaschaff (DE)
(74) Vertreter: Rieger, Harald, Dr.

(57) **Zusammenfassung**

Die Austrittsöffnung (10) für einen hinter der Innenverkleidung (3) der Seitenstruktur eines Kraftfahrzeugs angeordneten zusammengefalteten Gassack (9) einer Gassack-Aufprall-Schutzeinheit gegen Seitenaufprall, der im aktivierten Zustand zwischen dem Thorax des Fahrzeuginsassen (13) und der Seitenstruktur des Kraftfahrzeugs liegt, ist in einer ersten Ausgestaltung der Erfindung mit einer optisch und stylistisch der Innenseite der Innenverkleidung (3) angepaßten mit dem Gassack (9) verbundenen und an ihrem Umfang mit dem Rand der Austrittsöffnung (10) verklemmten Abdeckung (11) verschlossen. In einer zweiten Ausgestaltung der Erfindung ist die Austrittsöffnung für den Gassack durch das Gewebe der Innenverkleidung, das aus einem Material hoher Dehnbarkeit besteht, abgedeckt. Beim Aufblasen des Gassacks dehnt sich das Gewebe mit dem Gassack in Richtung auf den Fahrzeuginsassen aus, wobei das Gewebe plastisch oder elastisch verformbar ist. In einer weiteren Ausgestaltung der Erfindung ist die Austrittsöffnung für den Gassack in der Innenverkleidung durch eine optisch und stylistisch der Innenseite der Innenverkleidung angepaßte, mit ihrem oberen Rand schwenkbar an der Innenverkleidung angelenkte Klappe verschlossen ist. Die Anlenkung der Klappe ist vorzugsweise nahe der Unterkante der Öffnung für das Seitenfenster angeordnet, so daß die im Falle eines Seitenaufpralls durch den aus der Austrittsöffnung austretenden Gassack nach oben vor die Fensterscheibe geschwenkte Klappe als Auflagefläche für den Gassack dient und im Falle einer Zerstörung der Scheibe Beschädigungen durch Glassplitter weitgehend unterbleiben.

## Beschreibung

Die Erfindung betrifft eine Abdeckung der Austrittsöffnung für den im nicht aktivierten Zustand zusammengefalteten Gassack einer hinter der Innenverkleidung der Seitenstruktur eines Kraftfahrzeugs eingebauten Gassack-Aufprall-Schutzeinheit gegen einen dynamischen Seitenaufprall, deren durch das Einströmen von durch einen Gasgenerator erzeugtem Gas sich durch die Austrittsöffnung in Richtung auf den Fahrzeuginsassen entfaltende Gassack im aktivierten Zustand zwischen dem Thorax des Insassen und der benachbarten Seitenstruktur des Kraftfahrzeugs liegt.

Bei einem Seitenaufprall eines Kraftfahrzeugs auf ein Hindernis erfolgt eine starke rotatorische Seitwärtsbewegung des Insassen gegen die Stoßrichtung des Seitenaufpralls. Um die Gefahr schwerer und tödlicher Verletzungen von Insassen von Personenkraftwagen bei einem Seitenaufprall zu reduzieren, werden gemäß US-Standard No. 214 (FMVSS 214) ab September 1993 bestimmte Anforderungen an die Aufpralleigenschaften von Personenkraftwagen - ausgedrückt in Beschleunigungswerten - gestellt. So darf jeder Personenkraftwagen bei einem Seitenaufprall mittels einer mit einer Geschwindigkeit von 53,9 km/h bewegten, verformbaren, unter einem Winkel von 63 % auf den Personenkraftwagen auftreffenden Barriere für den Insassen die Seitenbeschleunigung des Brustkorbs von 85 g für Personenkraftwagen mit vier Seitentüren und 90 g für Personenkraftwagen mit zwei Seitentüren und die Beschleunigung des Beckens von 130 g nicht überschreiten. Um darüber hinaus die passive Sicherheit weiter zu erhöhen, ist in der DE-A-2 249 098 im Kopfbereich des Fahrzeuginsassen eine im seitlichen Dachrahmen des Fahrzeugs angeordnete Gassack-Aufprall-Schutzeinheit vorgesehen, deren Gassack im aufgeblasenen Zustand zwischen dem Kopf des Fahrzeuginsassen und der Seitenwand des Fahrzeugs zu liegen kommt. In der DE-C-3 422 263 ist eine Sicherheitseinrichtung zum Schutz von Fahrzeuginsassen gegen einen Seitenaufprall beschrieben, bei der über die Deformation der Karosserie ein in der Seitenwand des Fahrzeugs angeordneter, volumenveränderbarer Gasgenerator einen im seitlichen Dachholm des Fahrzeugs befindlichen Gassack aufbläst. Die GB-A-2 220 620 zeigt eine in der Tür eines Fahrzeugs untergebrachte Gassack-Aufprall-Schutzeinheit. Im Falle eines Seitenaufpralls soll sich der aufblasende Gassack zwischen den Fahrzeuginsassen und die Seitenwand des Fahrzeugs schieben. Gemäß der DE-A-3 741 637 ist zum Schutz gegen einen Seitenaufprall des Fahrzeugs in der Rückenlehne des Sitzes in dem die Schultern des Fahrzeuginsassen abstützenden Bereich wenigstens eine nach vorn vorspringende Seitenwange angeordnet, in der in einem Hohlraum ein aufblasbarer Gassack untergebracht ist. Abgesehen davon, daS die vorspringende Seitenwange das Ein- und Aussteigen des Fahrzeuginsassen behindert, ist auch eine besondere Konstruktion des Fahrzeugsitzes selbst erforderlich. Die DE-A-4 018 470 zeigt eine Sicherheitsvorrichtung gegen einen Seitenaufprall eines Fahrzeugs, bei der im seitlichen Teil der Rückenlehne des Fahrzeugs eine Gassack-Aufprall-Schutzeinheit angebracht ist, deren sich im Falle eines Seitenaufpralls aufblasender Gassack sich so zwischen den Fahrzeuginsassen und die Seitenwand des Fahrzeugs schiebt, daß der Mittelpunkt desjenigen Teils des Gassacks, mit dem der Insasse ist Kontakt kommt, im wesentlichen mit dem Schwerpunkt des Rumpfes des Insassen fluchtet. Die stark rotatorische Seitwärtsbewegung des Kopfes des Fahrzeuginsassen wird beim Seitenaufprall des Fahrzeugs aber nicht abgefangen. Die DE-A-4 119 788 befaßt sich mit einer Seitenaufprall-Schutzeinrichtung, die an einem verkleideten Seitenteil eines Kraftfahrzeugs angeordnet ist, und die aus einem hinter der Seitenteilverkleidung angebrachten aufblasbaren Schutzkissen besteht und ein das Schutzkissen in der Ausgangslage abdeckender Bereich der Seitenteilverkleidung in Richtung Fahrzeuginnenraum zur Bildung einer Öffnung für den Durchtritt eines Teils des sich beim Aufblasen ausdehnenden Schutzkissens um einen spitzen Winkel herausschwenkbar ist und das Schutzkissen in einem an die Gaszufuhröffnung anschließenden Bereich teilentfaltet angeordnet ist. Bei der in der DE-A-4 223 620 dargestellten Seitenaufprall-Schutzeinrichtung sind ein Gasgenerator und der damit verbundene aufblasbare Gassack an einer Stelle innerhalb des Fahrzeugkörpers seitlich von dem Fahrzeuginsassen angeordnet. Der Gasstrom ist nach oben in den Gassack gerichtet, so daß der Gassack nach oben aufgeblasen wird und einen Raum zwischen dem Fahrzeuginsassen und dem Fahrzeugkörper seitlich von dem Fahrzeuginsassen ausfüllt. In der DE-A-4 210 562 ist eine Vorrichtung für den Schutz von Insassen eines Kraftfahrzeugs bei einem Seitenaufprall wiedergegeben, die aus einer Mehrzahl im aktivierten Zustand länglicher, sich parallel zueinander im wesentlichen in einer gemeinsamen Vertikalebene erstreckender Airbags besteht, die an nebeneinanderliegenden Enden mit individuellen, gleichzeitig zündenden Gasgeneratoren verbunden sind, die im wesentlichen nebeneinander im Fahrzeug- oder Sitzaufbau untergebracht sind. Eine derartige Vorrichtung ist mit einem nicht unbeachtlichen Aufwand verbunden.

Es ist die Aufgabe der vorliegenden Erfindung, für eine hinter der Innenverkleidung der Seitenstruktur des Kraftfahrzeugs eingebaute Gassack-Aufprall-Schutzeinheit eine Abdeckung für die Austrittsöffnung des Gassacks zu schaffen, die den technischen Erfordernissen, insbesondere im Hinblick auf ein leichtes und ungehindertes Öffnen, und den ästhetischen Anforderungen genügt.

Die Lösung dieser Aufgabe ist eine optisch und stylistisch der Innenseite der Innenverkleidung der Fahrgastzelle angepaßte, mit dem Gassack vorzugsweise durch Nähen oder Verkleben verbundene Abdeckung, die an ihrem Umfang mit dem Rand der Austrittsöffnung der Innenverkleidung für den Gassack verklemmt ist. Die Klemmverbindung löst sich unter dem Druck des sich aufblasenden Gassacks.

Um einen Schutz des aufgeblasenen Gassacks vor Beschädigungen zu erreichen, ist die Abdeckung nach einem zusätzlichen Erfindungsmerkmal mit einem Faltenbalg verbunden, der am Rand der Austrittsöffnung der Innenverkleidung befestigt ist, sich mit dem Aufblasen des Gassacks entfaltet und diesen auf seiner Außenseite abdeckt.

Eine andere Lösung der erfindungsgemäßen Aufgabe sieht vor, daß die Austrittsöffnung für den Gassack durch das Gewebe der Innenverkleidung, das aus einem Material hoher Dehnbarkeit besteht, abgedeckt ist. Beim Aufblasen des Gassacks dehnt sich das Gewebe mit dem Gassack in Richtung auf den Fahrzeuginsassen aus, wobei das Gewebe plastisch oder elastisch verformbar ist.

Damit der Weg für die Seitenverlagerung des Fahrzeuginsassen bei einem Seitenaufprall in Richtung auf die Seitenstruktur des Fahrzeugs möglichst kurz ist, beträgt die Dehnbarkeit des Gewebes 300 bis 600 %, ohne daß ein Zerreißen eintritt.

Im Rahmen der weiteren Ausgestaltung der Erfindung besteht das Gewebe aus einem Grundmaterial und einem mit diesem zusammengefügten Zusatzmaterial, wobei das Grundmaterial bei gleicher Zugbelastung höher dehnbar ist als das Zusatzmaterial, so daß das Zusatzmaterial bei einer bestimmten Bruchdehnung schlagartig reißt. Im Falle eines Seitenaufpralls dehnt sich zunächst das Zusatzmaterial, bis es bei einer bestimmten Zugbelastung reißt. Danach dehnt sich das Grundmaterial aus. Auf diese Weise läßt sich das Aufblasen so steuern, daß der Fahrzeuginsasse früher an dem Verzögerungsverlauf des Fahrzeugs teilnimmt.

Die Dehnbarkeit des Zusatzmaterials beträgt 20 bis 50 % der Dehnbarkeit des Grundmaterials.

Eine weitere Möglichkeit der Lösung der erfindungsgemäßen Aufgabe ist darin zu sehen, daß die Austrittsöffnung für den Gassack in der Innenverkleidung durch eine optisch und stylistisch der Innenseite der Innenverkleidung angepaßte, mit ihrem oberen Rand schwenkbar an der Innenverkleidung angelenkte Klappe verschlossen ist.

Die Anlenkung der Klappe ist vorzugsweise nahe der Unterkante der Öffnung für das Seitenfenster angeordnet, so daß die im Falle eines Seitenaufpralls durch den aus der Austrittsöffnung austretenden Gassack nach oben vor die Fensterscheibe geschwenkte Klappe als Auflagefläche für den Gassack dient und im Falle einer Zerstörung der Scheibe Beschädigungen durch Glassplitter weitgehend unterbleiben.

Zweckmäßigerweise ist der Gassack mit der Klappe verbunden.

Die verschiedenen Ausführungsformen der Erfindung sind in den Zeichnungen beispielhaft dargestellt und werden nachfolgend erläutert.

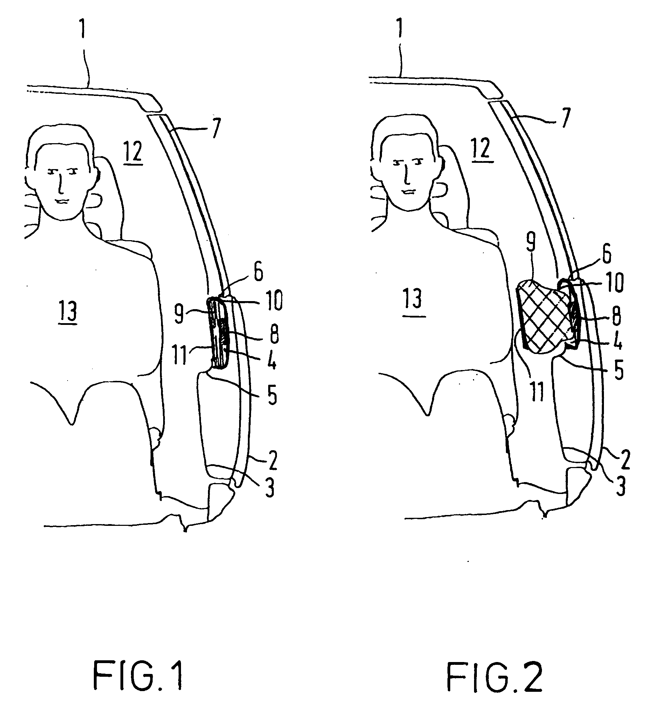

In der in Fig. 1 und 2 als Teilquerschnitt dargestellten linken Seite eines Personenkraftwagens (1) ist in der Vordertür (2) in einem hinter der Innenverkleidung (3) der Vordertür (2) angeordneten Hohlraum (4) im Bereich zwischen der Armlehne (5) und der Unterkante der Öffnung (6) für das Seitenfenster (7) ein Gasgenerator (8) mit einem auf diesem mäanderförmig gefalteten, im Falle eines Seitenaufpralls durch vom Gasgenerator (8) erzeugtes Gas aufblasbaren Gassack (9) eingebaut. Die Austrittsöffnung (10) der Innenverkleidung (3) für den sich aufblasenden Gassack (9) ist mit einer mit dem Gassack (9) verklebten Abdeckung (11), deren zum Fahrzeuginneren (12) weisende Seite optisch und stylistisch der Innenverkleidung (3) angepaßt ist, verschlossen, wobei die Abdeckung (11) an ihrem Umfang mit dem Rand der Austrittsöffnung (10) verklemmt ist. Fig. 2 zeigt den durch die Austrittsöffnung (10) der Innenverkleidung (3) ausgetretenen, vollständig aufgeblasenen Gassack (9), der sich zwischen die Vordertür (2) und den Rumpf des Insassen (13) geschoben hat.

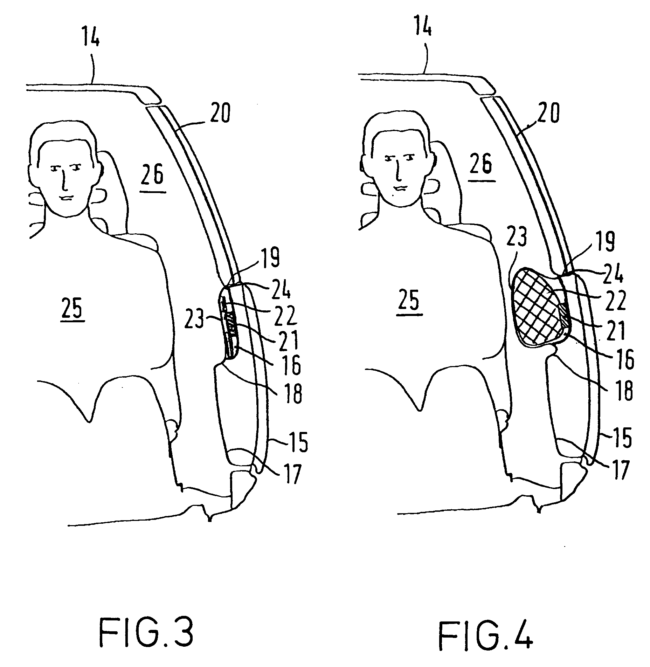

Gemäß dem in Fig. 3 und 4 wiedergegebenen Teilquerschnitt der linken Seite eines Personenkraftwagens (14) ist in der Vordertür (15) in einem Hohlraum (16) hinter der Innenverkleidung (17) im Bereich zwischen der Armlehne (18) und der Unterkante der Öffnung (19) für das Seitenfenster (20) ein Gasgenerator (21) mit einem auf diesem mäanderförmig gefalteten Gassack (22), der im Falle eines Seitenaufpralls durch das von dem Gasgenerator (21) erzeugte Gas aufgeblasen wird, eingebaut. Die Abdeckung (23) der Austrittsöffnung (24) der Innenverkleidung (17) für den sich aufblasenden Gassack (22) ist durch das Gewebe der Innenverkleidung (17) der Vordertür (15) gebildet, das aus einem Material hoher Dehnbarkeit von ca. 420 % besteht. Wie Fig. 4 zeigt, wird das Gewebe elastisch durch den sich entfaltenden Gassack (22) in Richtung auf den Insassen (25) in den Innenraum (26) des Fahrzeugs ausgedehnt.

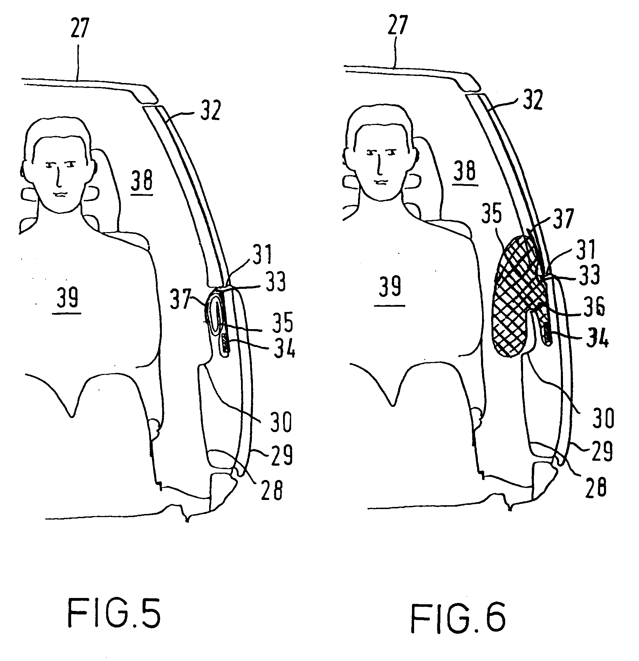

Bei dem in Fig. 5 und 6 gezeigten Teilquerschnitt durch die linke Seite eines Personenkraftwagens (27) ist in einem hinter der Innenverkleidung (28) der Vordertür (29) im Bereich zwischen der Armlehne (30) und der Unterkante der Öffnung (31) für das Seitenfenster (32) angebrachten Hohlraum (33) ein Gasgenerator (34) und ein mit diesem verbundener, in Rollfaltung oberhalb des Gasgenerators (34) liegender Gassack (35) eingefügt. Die Innenverkleidung (28) weist in dem oberen, an die Fensteröffnung (31) angrenzenden Abschnitt eine Austrittsöffnung (36) für den Gassack (35) auf, die durch eine nach oben in Richtung zum Seitenfenster (32) schwenkbare, an der Innenverkleidung (28) angelenkte Klappe (37) verschlossen ist. Fig. 6 zeigt, daß die Klappe (37) durch den aufgeblasenen Gassack (35) nach oben vor die Fensteröffnung (31) geschwenkt ist und der aufgeblasene Gassack (35) im Innenraum (38) des Fahrzeugs zwischen dem Insassen (39) und der Vordertür (29) liegt.

## Patentansprüche

1. Abdeckung der Austrittsöffnung (10) für den im nicht aktivierten Zustand zusammengefalteten Gassack (9) einer hinter der Innenverkleidung (3) der Seitenstruktur eines Kraftfahrzeugs (1) eingebauten Gassack-Aufprall-Schutzeinheit gegen einen dynamischen Seitenaufprall, deren durch das Einströmen von durch einen Gasgenerator (8) erzeugtem Gas sich durch die Austrittsöffnung in Richtung auf den Fahrzeuginsassen (13) entfaltende Gassack im aktivierten Zustand zwischen dem Thorax des Fahrzeuginsassen und der benachbarten Seitenstruktur des Kraftfahrzeugs liegt, dadurch gekennzeichnet, daß die optisch und stylistisch der Innenseite der Innenverkleidung (3) angepaßte Abdeckung (11) mit dem Gassack (9) verbunden und an ihrem Umfang mit dem Rand der Austrittsöffnung (10) verklemmt ist.

2. Abdeckung nach Anspruch 1, dadurch gekennzeichnet, daß diese mit dem Gassack (9) vernäht oder verklebt ist.

3. Abdeckung nach einem der Ansprüche 1 und 2, dadurch gekennzeichnet, daß diese über einen am Rand der Austrittsöffnung befestigten Faltenbalg mit der Innenverkleidung (3) verbunden ist.

4. Abdeckung der Austrittsöffnung (24) für den im nicht aktivierten Zustand zusammengefalteten Gassack (22) einer hinter der Innenverkleidung (17) der Seitenstruktur eines Kraftfahrzeugs (14) eingebauten Gassack-Aufprall-Schutzeinheit gegen einen dynamischen Seitenaufprall, deren durch das Einströmen von durch einen Gasgenerator (21) erzeugtem Gas sich durch die Austrittsöffnung in Richtung auf den Fahrzeuginsassen (25) entfaltende Gassack im aktivierten Zustand zwischen dem Thorax des Fahrzeuginsassen und der benachbarten Seitenstruktur des Kraftfahrzeugs liegt, dadurch gekennzeichnet, daß die Austrittsöffnung (24) durch das plastisch oder elastisch vorformbare Gewebe der Innenverkleidung (17), das aus einem Material hoher Dehnbarkeit besteht, abgedeckt ist.

5. Abdeckung nach Anspruch 4, dadurch gekennzeichnet, daß die Dehnbarkeit des Gewebes 300 bis 600 % beträgt.

6. Abdeckung nach einem der Ansprüche 4 und 5, dadurch gekennzeichnet, daß das Gewebe aus einem Grundmaterial und einem Zusatzmaterial zusammengefügt ist und das Grundmaterial bei gleicher Zugbelastung eine höhere Dehnbarkeit als das Zusatzmaterial besitzt.

7. Abdeckung nach Anspruch 6, dadurch gekennzeichnet, daß die Dehnbarkeit des Zusatzmaterials 20 bis 50 % der Dehnbarkeit des Grundmaterials beträgt.

8. Abdeckung der Austrittsöffnung (36) für den im nicht aktivierten Zustand zusammengefalteten Gassack einer hinter der Innenverkleidung (28) der Seitenstruktur eines Kraftfahrzeugs (27) eingebauten Gassack-Aufprall-Schutzeinheit gegen einen dynamischen Seitenaufprall, deren durch das Einströmen von durch einen Gasgenerator (34) erzeugtem Gas sich durch die Austrittsöffnung in Richtung auf den Fahrzeuginsassen (39) entfaltende Gassack im aktivierten Zustand zwischen dem Thorax des Fahrzeuginsassen und der benachbarten Seitenstruktur des Kraftfahrzeugs liegt, dadurch gekennzeichnet, daS die optisch und stylistisch der Innenseite der Innenverkleidung (28) angepaßte Abdeckung der Austrittsöffnung (36) aus einer an ihrem oberen Rand schwenkbar angelenkten Klappe (37) besteht.

9. Abdeckung nach Anspruch 8, dadurch gekennzeichnet, daß die Klappe (37) mit dem Gassack (35) verbunden ist.
